# FASCICULE DE BREVET EUROPEEN

(11) **EP 4 473 197 B1**
(45) Date de publication et mention de la délivrance du brevet: **26.11.2025**
(21) Numéro de dépôt: 23706406.8
(22) Date de dépôt: 27.01.2023
(51) Int. Cl.: B29C 70/48, B29L 31/08, B29D 99/00, D03D 25/00, B29C 70/22, D03D 41/00, F01D 5/14, F01D 5/28

(54) **AUBE HYBRIDE METAL/COMPOSITE A ORIENTATION TEXTILE ADAPTEE AUX SOLLICITATIONS MECANIQUES**
HYBRIDE METALL-/VERBUNDSTOFFSCHAUFEL MIT AN MECHANISCHE SPANNUNGEN ANGEPASSTER TEXTILAUSRICHTUNG
HYBRID METAL/COMPOSITE BLADE WITH TEXTILE ORIENTATION ADAPTED TO MECHANICAL STRESSES

(30) Priorité: 02.02.2022 FR 2200933
(43) Date de publication de la demande: 11.12.2024
(73) Titulaire: SAFRAN AIRCRAFT ENGINES, 75015 Paris (FR)
(72) Inventeur: BOSSAN, Pierre-Antoine, 77550 MOISSY-CRAMAYEL (FR); CHARLEUX, François, 77550 MOISSY-CRAMAYEL (FR)
(74) Mandataire: Cabinet Beau de Loménie
(86) Numéro de dépôt international: PCT/FR2023/050107
(87) Numéro de publication internationale: WO 2023/148443

(56) Documents cités:
- FR-A1- 2 989 991
- FR-A1- 3 107 719
- FR-A1- 3 108 143
- FR-A1- 3 108 666

## Description

### Domaine Technique

L'invention concerne une aube en matériau composite à matrice organique (désigné dans la suite par « matériau CMO ») munie d'un élément métallique et dont l'orientation textile est adaptée aux sollicitations mécaniques sur tout ou partie de la zone d'attache avec cet élément afin de réduire le risque de désolidarisation de ce dernier.

### Technique antérieure

Il est connu d'utiliser des pièces en matériau CMO pour la réalisation d'éléments de partie froide de turbomachine aéronautique, comme des aubes de soufflante. Il est également connu de rapporter un élément métallique sur le composite afin d'améliorer ses propriétés, par exemple de coller un clinquant métallique de protection sur un bord d'attaque d'une aube de soufflante afin d'améliorer la tenue aux impacts rencontrés en fonctionnement (impacts d'oiseaux, de grêlons ou de débris). Néanmoins, les sollicitations exercées lors du fonctionnement peuvent dans certains cas aboutir à une désolidarisation de l'élément métallique. L'invention vise à répondre à ce problème. On connait FR 3 108 143 qui divulgue une aube pour turbomachine comprenant des fibres tissées en 3D.

### Exposé de l'invention

L'invention concerne une aube en matériau composite comprenant un renfort fibreux densifié par une matrice organique et étant munie, sur une zone d'attache, d'un élément métallique,
l'aube étant caractérisée en ce que le renfort comprend, dans au moins une région de la zone d'attache, une orientation textile en surface adaptée au sens des sollicitations mécaniques en présentant des premiers fils de peau qui s'étendent selon une direction principale de sollicitation mécanique et qui sont liés avec des deuxièmes fils de peau transverses aux premiers fils, lesdits premiers fils de peau étant majoritaires en surface dans ladite région de la zone d'attache.

Les inventeurs ont constaté que l'orientation des fils en surface du renfort sur la zone d'attache a une incidence sur l'accroche de l'élément métallique au matériau CMO en fonctionnement. L'invention propose ainsi de favoriser sur tout ou partie de la zone d'attache les premiers fils qui sont orientés le long de la direction principale de sollicitation afin de réduire le risque de désolidarisation de l'élément métallique. La direction principale de sollicitation est fonction du type d'aube et d'élément métallique considérés et peut être déterminée sans difficulté par un homme du métier. La direction principale de sollicitation peut correspondre à une direction axiale de l'aube (direction correspondant à la corde de l'aube et à la direction d'écoulement d'air), ou à une direction radiale de l'aube (direction correspondant à l'axe joignant le pied au sommet de l'aube).

Dans un exemple de réalisation, une proportion des premiers fils de peau en surface est au moins égale au double d'une proportion des deuxièmes fils de peau en surface dans ladite région de la zone d'attache.

Un tel exemple est particulièrement adapté à des sollicitations mécaniques s'exerçant très majoritairement dans une direction donnée.

Dans un exemple de réalisation, le renfort fibreux est tissé en présentant, au moins en peau, un tissage évolutif entre la région de la zone d'attache et une zone de l'aube située en dehors de la zone d'attache.

Dans ce cas, il y a une adaptation locale du renfort pour améliorer l'accroche de l'élément métallique sans que le renfort ne soit modifié en dehors de la zone d'attache. On peut ainsi concevoir le textile différemment dans la zone d'attache et en dehors de celle-ci afin d'obtenir des propriétés optimales.

Dans un exemple de réalisation, la zone d'attache comprend une première région avec une première proportion de premiers fils en surface, et une deuxième région, distincte de la première région, avec une deuxième proportion de premiers fils en surface, distincte de la première proportion.

Un tel exemple est particulièrement adapté au cas où l'orientation des sollicitations mécaniques varie notablement sur la zone d'attache, réduisant ainsi davantage encore le risque de désolidarisation de l'élément métallique. Selon cet exemple, les premiers fils sont majoritaires dans la première région mais plus forcément dans la deuxième région où ils peuvent toujours être majoritaires ou dans laquelle les deuxièmes fils peuvent être majoritaires. On peut en particulier avoir une proportion équilibrée, sensiblement 50/50, de premiers et de deuxièmes fils dans la deuxième région.

La suite évoque différents exemples d'aube pouvant être concernées par l'invention. Dans un exemple de réalisation, l'élément métallique est un clinquant de protection recouvrant un bord d'attaque de l'aube, et la direction principale de sollicitation mécanique correspond à une direction axiale de l'aube. En particulier, l'aube peut être une aube de soufflante. Selon une variante, l'aube est une aube directrice de sortie (« Outlet Guide Vane » ; « OGV » dans la littérature anglosaxonne).

Selon un autre exemple, l'aube définit une cavité interne et l'élément métallique est un longeron inséré dans cette cavité interne, la direction principale de sollicitation mécanique correspondant à une direction radiale de l'aube.

### Brève description des dessins

[Fig. 1] La figure 1 est une vue en coupe d'un exemple d'aube selon l'invention munie d'un clinquant métallique de protection prise transversalement à une direction radiale.
[Fig. 2] La figure 2 représente un détail du renfort fibreux de l'aube de la figure 1 sur la zone d'attache dans un plan transverse à une direction axiale.
[Fig. 3] La figure 3 représente une variante d'aube selon l'invention.

### Description des modes de réalisation

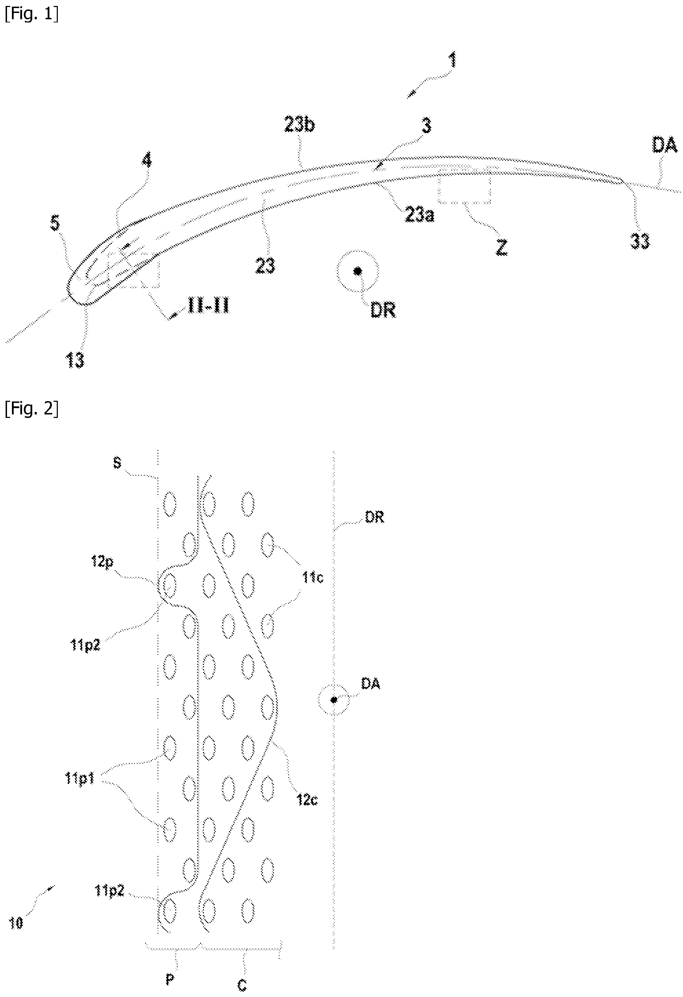

La figure 1 représente une aube 1 comprenant un matériau 3 CMO muni d'un clinquant métallique 5 de protection. D'une manière générale, l'aube 1 peut être une aube rotative ou une aube fixe. L'exemple de la figure 1 concerne une aube rotative, ici une aube de soufflante. Le matériau 3 CMO comprend un renfort fibreux 10 dont la structure va être décrite dans la suite et qui est densifié par une matrice organique. A titre illustratif, le renfort fibreux 10 peut être formé de torons de carbone, et la matrice peut être une résine époxy. Toutefois, l'homme du métier reconnaîtra que d'autres matériaux peuvent être utilisés en fonction de l'application considérée. Le matériau 3 CMO présente un bord d'attaque 13 à une extrémité amont et un bord de fuite 33 à une extrémité aval, ainsi qu'un profil aérodynamique 23 entre le bord d'attaque 13 et le bord de fuite 33. Sauf mention contraire, les termes « amont » et « aval » sont pris par rapport au sens d'écoulement d'air. De manière connue en soi, le profil 23 comprend une face intrados 23a et une face extrados 23b dont la forme est adaptée aux propriétés aérodynamiques souhaitées. L'air s'écoule autour de l'aube 1 le long d'une direction axiale DA et l'aube 1 s'étend le long d'une direction radiale DR.

Dans l'exemple de la figure 1, le clinquant 5 est rapporté sur le matériau 3 CMO sur une zone d'attache 4 située sur le bord d'attaque 13. Le clinquant 5 permet de protéger le matériau 3 CMO des impacts d'objets, comme des grêlons, des oiseaux ou des débris. A titre d'exemple, le clinquant 5 peut être en titane ou en alliage de titane. Le clinquant 5 peut être solidarisé au matériau 3 CMO par collage.

La figure 2 montre un exemple possible d'orientation textile du renfort fibreux 10 sur la zone d'attache, adapté aux directions de sollicitations mécaniques subies en fonctionnement afin d'améliorer l'accroche de l'élément métallique 5. L'orientation textile adaptée est présente en peau P du renfort fibreux 10 c'est-à-dire dans sa zone de surface S en regard de l'élément métallique 5, ici sur sa surface externe. Le renfort fibreux présente des caractéristiques textiles différentes entre la peau P et le cœur C, ici une armure de tissage différente. Le renfort fibreux 10 comprend des premiers fils de peau 11p1-11p2 orientés le long de la direction axiale DA et liés à des deuxièmes fils de peau 12p transverses aux premiers fils 11p1-11p2. Dans l'exemple illustré, les premiers fils de peau 11p1-11p2 sont tissés avec les deuxièmes fils de peau 12p selon un tissage bidimensionnel, par exemple avec une armure satin. L'invention n'est toutefois pas limitée à une telle réalisation. Les premiers fils de peau 11p1 apparaissent davantage en surface S que les deuxièmes fils 12p, permettant ainsi de conférer une meilleure tenue aux sollicitations mécaniques qui s'exercent ici principalement le long de la direction axiale DA. Les deuxièmes fils de peau 12p lient les premiers fils de peau 11p1-11p2 en étant recouverts par une première partie 11p1 des premiers fils de peau qui apparaissent alors en surface S, et en recouvrant une deuxième partie 11p2 des premiers fils de peau, les deuxièmes fils 12p de peau apparaissant alors localement en surface S. Pour chaque deuxième fil 12p de peau, le nombre de premiers fils de peau 11p1 dans la première partie peut être supérieur au nombre de premiers fils de peau 11p2 dans la deuxième partie. Dans tout ou partie de la zone d'attache, l'aire définie par les portions de premiers fils de peau 11p1 en surface S est ici supérieure à celle définie par les portions de deuxièmes fils de peau 12p en surface S. Dans l'exemple illustré, le renfort fibreux 10 présente à cœur C un tissage tridimensionnel, par exemple à armure « interlock », dans lequel les deuxièmes fils 12c de cœur tissent plusieurs couches de premiers fils 11c de cœur. Le tissage est évolutif de sorte à modifier localement l'orientation textile en peau P par rapport à celle dans une zone Z située en dehors de la zone d'attache 4. En particulier, seule l'armure de tissage en peau P peut être adaptée sur la zone d'attache 4, sans modification de l'armure de tissage à cœur C. L'orientation textile adaptée peut s'étendre sur l'intégralité de la zone d'attache 4, ou seulement sur une fraction de celle-ci, par exemple sur une partie seulement de sa hauteur. D'une manière générale, l'orientation textile adaptée où les premiers fils de peau 11p1-11p2 sont majoritaires peut s'étendre sur une aire au moins égale à 10%, par exemple au moins égale à 50%, de l'aire de la zone d'attache 4. D'une manière générale, les premiers fils 11p1-11p2, 11c peuvent être les fils de trame et les deuxièmes fils 12p, 12c les fils de chaîne, mais on ne sort pas du cadre de l'invention lorsque l'inverse est considéré.

La description des figures 1 et 2 qui vient d'être faite a fourni divers détails relatifs à la structure d'un exemple d'aube 1 hybride selon l'invention. La suite aborde un exemple de fabrication possible de cette aube 1.

On réalise tout d'abord le renfort fibreux 10 par tissage, en utilisant des moyens connus en soi, et en conférant dans la zone d'attache 4 une proportion majoritaire de premiers fils 11p1 de peau en surface S, comme illustré à la figure 2. Le clinquant métallique 5 est ensuite recouvert d'un adhésif puis rapporté sur le renfort fibreux 10 sur la zone d'attache 4. L'ensemble est ensuite placé dans un moule et l'on procède à l'introduction d'une résine de sorte à imprégner la porosité du renfort fibreux, par exemple par mise en œuvre d'une technique connue en soi de moulage par transfert de résine (« Resin Transfer Molding » ; « RTM »). Une cuisson de l'ensemble dans le moule est ensuite réalisée de sorte à faire réticuler la résine, et obtenir ainsi la matrice organique, ainsi que l'adhésif et réaliser un lien entre le clinquant et la résine. On obtient ainsi l'aube 1 prête à être montée sur un disque de soufflante de turbomachine, après réalisation d'éventuelles opérations de finition telles que des usinages ou le dépôt d'une peinture. Selon ce procédé, la même étape de cuisson est mise à profit pour réticuler à la fois la résine et l'adhésif, simplifiant ainsi la mise en œuvre par rapport au cas où le clinquant 5 est collé sur le matériau CMO préparé au préalable.

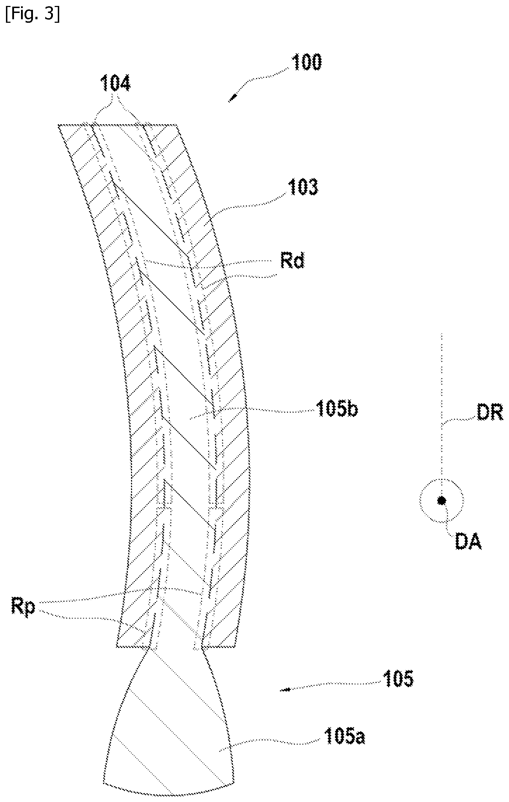

Dans l'exemple d'aube 1 hybride des figures 1 et 2, l'élément métallique 5 est disposé sur la surface externe du matériau 3 CMO, en l'occurrence sur son bord d'attaque 13. L'invention n'est toutefois pas limitée à une telle réalisation comme le montre la figure 3, relative à un élément métallique introduit à l'intérieur du matériau CMO, qui va être décrite ci-dessous.

L'aube 100 illustrée à la figure 3 comprend un longeron 105 métallique définissant un pied 105a destiné à être fixé à un disque rotatif et une portion 105b d'armature introduite dans une cavité interne du matériau 103 CMO avec une fixation de la portion 105b par exemple par collage sur une zone d'attache 104. L'aube 100 peut par exemple être une aube de soufflante non carénée (« open fan » en littérature anglosaxonne). De manière similaire à ce qui a été décrit plus haut, l'orientation textile en surface du renfort du CMO 103 est adaptée sur la zone d'attache 104 aux sollicitations mécaniques rencontrées. Néanmoins dans le cas illustré est plus spécifique dans la mesure où la zone d'attache 104 présente deux régions distinctes Rp et Rd, décalées le long de la direction radiale DR et ne se recouvrant pas, qui présentent une orientation textile distincte. La région distale Rd présente une proportion supérieure de premiers fils en surface qui sont dirigés ici le long de la direction radiale DR afin de résister au chargement centrifuge de la pièce. Les détails décrits plus haut en lien avec la figure 2 relatifs au caractère majoritaire des premiers fils et à leur liaison avec les deuxièmes fils sont applicables *mutatis mutandis* en tenant compte de la différence d'orientation de fils. La région proximale Rp, région plus proche du pied 105a, subit un chargement plus équilibré et l'on peut donc adopter une proportion de premiers fils en surface inférieure à celle dans la région distale Rd, en particulier on peut avoir une proportion sensiblement 50/50 entre les premiers et deuxièmes fils dans cette région. D'une manière générale, l'invention propose d'adapter l'orientation textile en peau sur la zone d'attache aux sollicitations en fonctionnement, il a été décrit le cas où au moins une région de la zone d'attache comprenait une proportion de premiers fils supérieure à celle des deuxièmes fils. Néanmoins dans un cas particulier de l'invention, on peut avoir une zone d'attache ayant au moins localement une répartition équilibrée, sensiblement 50/50, de premiers et deuxièmes fils, une proportion de premiers fils orientés le long de la direction principale de sollicitation mécanique de 50% étant également considérée comme majoritaire au sens de l'invention.

## Revendications

1. Aube (1 ; 100) en matériau composite comprenant un renfort fibreux (10) densifié par une matrice organique et étant munie, sur une zone d'attache (4 ; 104), d'un élément métallique (5 ; 105),
l'aube étant **caractérisée en ce que** le renfort comprend, dans au moins une région (Rd ; Rp) de la zone d'attache, une orientation textile en surface (S) adaptée au sens des sollicitations mécaniques en présentant des premiers fils (11p1) de peau qui s'étendent selon une direction (DA ; DR) principale de sollicitation mécanique et qui sont liés avec des deuxièmes fils (12p) de peau transverses aux premiers fils, lesdits premiers fils de peau étant majoritaires en surface dans ladite région de la zone d'attache,
l'aube étant telle que :
- l'élément métallique (5) est un clinquant de protection recouvrant un bord d'attaque (13) de l'aube, et la direction principale de sollicitation mécanique correspondant à une direction axiale (DA) de l'aube qui correspond à la corde de l'aube, ou
- l'aube définissant une cavité interne et l'élément métallique (105) étant un longeron inséré dans cette cavité interne, le longeron définissant un pied (105a) destiné à être fixé à un disque rotatif, la direction principale de sollicitation mécanique correspondant à une direction radiale (DR) de l'aube qui correspond à un axe joignant le pied au sommet de l'aube.

2. Aube (1 ; 100) selon la revendication 1, dans laquelle une proportion des premiers fils (11p1) de peau en surface est au moins égale au double d'une proportion des deuxièmes fils (12p) de peau en surface dans ladite région de la zone d'attache (4 ; 104).

3. Aube (1 ; 100) selon la revendication 1 ou 2, dans laquelle le renfort fibreux est tissé en présentant, au moins en peau (P), un tissage évolutif entre la région de la zone d'attache (4 ; 104) et une zone (Z) de l'aube située en dehors de la zone d'attache.

4. Aube (100) selon l'une quelconque des revendications 1 à 3, dans laquelle la zone d'attache (104) comprend une première région (Rd) avec une première proportion de premiers fils en surface, et une deuxième région (Rp), distincte de la première région, avec une deuxième proportion de premiers fils en surface, distincte de la première proportion.

5. Aube (1) selon l'une quelconque des revendications 1 à 4, dans laquelle l'élément métallique (5) est un clinquant de protection recouvrant un bord d'attaque (13) de l'aube, et dans laquelle la direction principale de sollicitation mécanique correspond à une direction axiale (DA) de l'aube qui correspond à la corde de l'aube, l'aube étant une aube de soufflante.

6. Aube selon l'une quelconque des revendications 1 à 4, dans laquelle l'élément métallique (5) est un clinquant de protection recouvrant un bord d'attaque (13) de l'aube, et dans laquelle la direction principale de sollicitation mécanique correspond à une direction axiale (DA) de l'aube qui correspond à la corde de l'aube, l'aube étant une aube directrice de sortie.

## Patentansprüche

1. Schaufel (1; 100) aus Verbundmaterial, das eine Faserverstärkung (10) umfasst, die durch eine organische Matrix verdichtet ist, und auf einer Befestigungszone (4; 104) mit einem metallischen Element (5; 105) versehen ist, wobei die Schaufel **dadurch gekennzeichnet ist, dass** die Verstärkung in zumindest einer Region (Rd; Rp) der Befestigungszone eine Orientierung der Textur an der Oberfläche (S) umfasst, die an die Richtung der mechanischen Beanspruchungen angepasst ist, indem sie erste Fäden (11p1) der Haut aufweist, die sich gemäß einer Hauptrichtung (DA; DR) der mechanischen Beanspruchung erstrecken, und die mit zweiten Fäden (12p) der Haut verbunden sind, die quer zu den ersten Fäden verlaufen, wobei die ersten Fäden der Haut in der Region der Befestigungszone an der Oberfläche in der Mehrzahl sind,
wobei die Schaufel derart beschaffen ist, dass:
- das metallische Element (5) eine Schutzverkleidung ist, die eine Vorderkante (13) der Schaufel bedeckt, und die Hauptrichtung der mechanischen Beanspruchung einer axialen Richtung (DA) der Schaufel entspricht, die der Sehne der Schaufel entspricht, oder
- die Schaufel einen inneren Hohlraum definiert und das metallische Element (105) eine in diesen inneren Hohlraum eingesetzte Längsstrebe ist, wobei die Längsstrebe einen Fuß (105a) definiert, der dazu bestimmt ist, an einer drehenden Scheibe befestigt zu werden, wobei die Hauptrichtung der mechanischen Beanspruchung einer radialen Richtung (DR) der Schaufel entspricht, die einer Achse entspricht, die den Fuß mit dem Scheitelpunkt der Schaufel verbindet.

2. Schaufel (1; 100) nach Anspruch 1, wobei ein Anteil der ersten Fäden (11p1) der Haut an der Oberfläche zumindest doppelt so groß ist wie ein Anteil der zweiten Fäden (12p) der Haut an der Oberfläche in der Region der Befestigungszone (4; 104).

3. Schaufel (1; 100) nach Anspruch 1 oder 2, in welcher die Faserverstärkung so gewebt ist, dass sie zumindest in der Haut (P) eine sich zwischen der Region der Befestigungszone (4; 104) und einer Zone (Z) der Schaufel, die sich außerhalb der Befestigungszone befindet, entwickelnde Webung aufweist.

4. Schaufel (100) nach einem der Ansprüche 1 bis 3, in welcher die Befestigungszone (104) eine erste Region (Rd) mit einem ersten Anteil von ersten Fäden an der Oberfläche und eine zweite Region (Rp), die sich von der ersten Region unterscheidet, mit einem zweiten Anteil von ersten Fäden an der Oberfläche aufweist, der sich von dem zweiten Anteil unterscheidet.

5. Schaufel (1) nach einem der Ansprüche 1 bis 4, wobei das metallische Element (5) eine Schutzverkleidung ist, die eine Vorderkante (13) der Schaufel bedeckt, und wobei die Hauptrichtung der mechanischen Beanspruchung einer axialen Richtung (DA) der Schaufel entspricht, die der Sehne der Schaufel entspricht, wobei die Schaufel eine Gebläseschaufel ist.

6. Schaufel nach einem der Ansprüche 1 bis 4, wobei das metallische Element (5) eine Schutzverkleidung ist, die eine Vorderkante (13) der Schaufel bedeckt, und wobei die Hauptrichtung der mechanischen Beanspruchung einer axialen Richtung (DA) der Schaufel entspricht, die der Sehne der Schaufel entspricht, wobei die Schaufel eine Austritts-Leitschaufel ist.

## Claims

1. A blade or vane (1; 100) made of a composite material, the blade or vane comprising a fibrous reinforcement (10) densified by an organic matrix and being provided, in an attachment zone (4; 104), with a metal element (5; 105), the blade or vane being **characterized in that** the reinforcement comprises, in at least one region (Rd; Rp) of the attachment zone, a surface textile orientation (S) adapted to the direction of mechanical stresses by having first skin threads (11p1) that extend in a main mechanical stress direction (DA; DR) and that are bonded to second skin threads (12p) transverse to the first threads, said first skin threads being a majority on the surface of said region of the attachment zone,
the blade or vane being such that:
- the metal element (5) is a protective foil covering a leading edge (13) of the blade or vane, and the main mechanical stress direction corresponding to an axial direction (DA) of the blade or vane which corresponds to the chord of the blade or vane, or
- the blade defining an internal cavity and the metal element (105) being a spar inserted in this internal cavity, the spar defining a root (105a) intended to be fixed to a rotating disk, the main mechanical stress direction corresponding to a radial direction (DR) of the blade which corresponds to an axis joining the root to the top of the blade.

2. The blade or vane (1; 100) according to claim 1, wherein a proportion of the first skin threads (11p1) on the surface is at least equal to twice a proportion of the second skin threads (12p) on the surface in said region of the attachment zone (4; 104).

3. The blade or vane (1; 100) according to claim 1 or 2, wherein the fibrous reinforcement is woven by having, at least in the skin (P), an evolving weave between the region of the attachment zone (4; 104) and a zone (Z) of the blade located outside the attachment zone.

4. The blade or vane (100) according to any one of claims 1 to 3, wherein the attachment zone (104) comprises a first region (Rd) with a first proportion of first surface threads, and a second region (Rp), distinct from the first region, with a second proportion of first surface threads, distinct from the first proportion.

5. The blade (1) according to any one of claims 1 to 4, wherein the metal element (5) is a protective foil covering a leading edge (13) of the blade, and wherein the main mechanical stress direction corresponds to an axial direction (DA) of the blade which corresponds to the chord of the blade, the blade being a fan blade.

6. The vane according to any one of claims 1 to 4, wherein the metal element (5) is a protective foil covering a leading edge (13) of the vane, and wherein the main mechanical stress direction corresponds to an axial direction (DA) of the vane which corresponds to the chord of the vane, the vane being an outlet guide blade.
